# EUROPÄISCHE PATENTSCHRIFT

(11) **EP 2 559 041 B1**
(45) Veröffentlichungstag und Bekanntmachung des Hinweises auf die Patenterteilung: **28.01.2015**
(21) Anmeldenummer: 11707085.4
(22) Anmeldetag: 23.02.2011
(51) Int. Cl.: H01H 9/00

(54) **SCHRITTSCHALTGETRIEBE FÜR LASTSTUFENSCHALTER VON STUFENTRANSFORMATOREN**
INDEXING GEAR TRAIN FOR ON-LOAD TAP CHANGERS OF STEP TRANSFORMERS
INDEXEUR PAS-À-PAS POUR GRADUATEUR DE RÉGLAGE EN CHARGE DE TRANSFORMATEURS À ÉCHELONS

(30) Priorität: 15.04.2010 DE 102010015052
(43) Veröffentlichungstag der Anmeldung: 20.02.2013
(73) Patentinhaber: Maschinenfabrik Reinhausen GmbH, 93059 Regensburg (DE)
(72) Erfinder: HÖPFL, Klaus, 93142 Maxhütte-Haidhof (DE); WILHELM, Gregor, 93059 Regensburg (DE)
(86) Internationale Anmeldenummer: PCT/EP2011/000850
(87) Internationale Veröffentlichungsnummer: WO 2011/128011

(56) Entgegenhaltungen:
- DE-A1- 4 009 503
- FR-A1- 2 193 236
- FR-A1- 2 482 361

## Beschreibung

Die vorliegende Erfindung betrifft ein Schrittschaltgetriebe für Laststufenschalter von Stufentransformatoren mit den Merkmalen des unabhängigen Patentanspruchs.

Derartige bzw. ähnliche Schrittschaltgetriebe sind bspw. durch die einen Vorwähler zeigende DE 26 08 051 A sowie durch die eine sog. Wendeeinrichtung zeigende US 27 85 242 A offenbart. Bei dieser bekannten Bauart von Schrittschaltgetrieben ist es notwendig, geeignete mechanische Mittel zur Endlagensperrung vorzusehen. Diese Endlagensperrmittel sollen zuverlässig verhindern, dass die Endpositionen der Stufenwähler bzw. Laststufenschalter überfahren werden können, was regelmäßig zu schweren Schäden am Stufenwähler führen würde.

Weiterhin offenbart die DE 10 39 129 A eine mechanische Endlagensperre, bei der eine separate Sperrscheibe, die mit einer Steuerscheibe zur Betätigung des Stufenwählers gleichachsig verbunden ist, gemeinsam mit einer Klinke zusammenwirkt, die wiederum durch dazwischen angeordnete mechanische Mittel von der Steuerscheibe betätigt werden kann. Diese Endlagensperre ist mechanisch aufwändig und darüber hinaus für die Sperrung zweier konzentrisch übereinander angeordneter unabhängig voneinander bewegbarer Malteserräder ungeeignet.

Die DE 23 39 973 A zeigt eine Anordnung, bei der sich auf dem Malteserkreuz ein Anschlag befindet, der zum entsprechenden Zeitpunkt über ein Hebelsystem eine Wendeeinrichtung oder Vorwähler betätigt.

Die DE 40 09 503 C2 offenbart ein weiterentwickeltes Schrittschaltgetriebe für Stufenwähler von Stufentransformatoren, bei dem zwei Malteserräder auf einer gemeinsamen Stufenwählerachse konzentrisch übereinander angeordnet sind und durch eine Malteserkurbel angetrieben werden, die einen oberen und einen unteren Mitnehmerbolzen besitzt. Diese beiden Mitnehmerbolzen sind gegeneinander um 180 Grad versetzt und greifen in Rollenschlitze des jeweiligen Malteserrades ein. Weiterhin wirkt das eine Malteserrad mit einem Wenderanschlag zusammen, durch den an einem bestimmten Punkt des Schaltablaufes ein auf einer Welle angeordneter schwenkbarer Wenderhebel zur Betätigung eines Wenders oder Vorwählers verschwenkt wird. Auf dem Wenderhebel ist ein Sperrblech angeordnet, das mittels eines Langloches auf der den Wenderhebel tragenden Welle verschiebbar ist.

Ein Ziel der vorliegenden Erfindung besteht darin, eine zuverlässig und möglichst reibungsarm und/oder leichtgängig arbeitende Schrittschaltung für ein Schrittschaltgetriebe eines Laststufenschalters oder Stufenwählers eines Stufentransformators vorzuschlagen, bei der das getriebene Element in seiner jeweiligen Betriebsstellung zuverlässig fixiert wird.

Dieses Ziel der Erfindung wird mit dem Gegenstand des unabhängigen Patentanspruchs erreicht. Merkmale vorteilhafter Weiterbildungen der Erfindung ergeben sich aus den abhängigen Ansprüchen. Zur Erreichung des Ziels der Erfindung schlägt die vorliegende Erfindung ein Schrittschaltgetriebe für einen Laststufenschalter, Stufenwähler oder vergleichbaren Schalter eines Stufentransformators vor, bei dem mindestens eine über einen Federenergiespeicher angetriebene Kurvenscheibe mit einer Abtriebsscheibe mit daran drehbar gelagert angeordneten Eingriffselementen zusammenwirkt. Diese Abtriebsscheibe mit den daran drehbar gelagerten Eingriffselementen ist drehfest mit einer Schalterwelle verbunden. Diese Anordnung dient dazu, die Kurvenscheibe in Zusammenwirkung mit den Eingriffselementen der Abtriebsscheibe eine stufenweise Drehung der Schalterwelle um einen definierten Schrittwinkel auslösen zu lassen. Die vorliegende Erfindung sieht vor, dass die Eingriffselemente jeweils durch drehbar an einer Flachseite in Nähe des Außenumfangs der Scheibe gelagerte Rollen gebildet sind, die mit einer korrespondierenden Eingriffskontur mit regelmäßig aufeinander folgenden und ineinander übergehenden konvexen und konkaven Kurvenabschnitten an der Außenmantelfläche der wenigstens einen Kurvenscheibe abwälzen. Eine solche Konfiguration bildet eine Wälzpaarung, bei der die als Rollen ausgebildeten Eingriffselemente an der, eine sich alternierend krümmende Kurve bildende Außenmantelfläche der Kurvenscheibe abwälzen, ohne dass es dabei zu nennenswerten gleitenden Bewegungen mit den damit verbundenen Reibungseffekten kommt. Gegenüber einem bisher verwendeten Maltesergetriebe entsteht der wesentliche Vorteil einer sehr leichtgängigen gegenseitigen Antriebsübertragung bei einer gleichzeitig sehr zuverlässigen und klemmsicheren Funktion. Das erfindungsgemäße Schrittschaltgetriebe ermöglicht eine Blockierung der Scheiben mit den daran angeordneten Rollen nach jeder Schrittschaltung in einer gewünschten bzw. definierbaren Winkellage, was eine definierten Betriebsstellung entspricht. Die Rollen wälzen zu diesem Zweck auf geeignet konturierten Sperrkurven der Kurvenscheiben bzw. der Kurvenscheibe ab.

Bei dem erfindungsgemäßen Schrittschaltgetriebe können wahlweise zwei, drei oder mehr Eingriffselemente bzw. drehbare Rollen in jeweils regelmäßiger Winkelteilung am Außenumfang der Abtriebsscheibe angeordnet sein. Diese Drehachsen der Rollen sind sinnvollerweise parallel zur Drehachse der Scheibe und damit auch der Schalterwelle orientiert, so dass ein leicht laufendes und zuverlässig funktionierendes Schrittschaltgetriebe mit einer entsprechend der gewählten Anzahl der Rollen und deren Verteilung am Außenumfang der Scheibe definierten Winkelteilung gebildet ist. Die Außenkontur der Kurvenscheibe und seine zumindest abschnittsweise konkave Außenmantelfläche ist vorzugsweise so zu gestalten, dass während des Schaltschrittes die jeweilige Rolle weitgehend spielfrei im konkaven Kurvenabschnitt an der Mantelseite der Kurvenscheibe abwälzen kann, während in der gesperrten Lage eine Weiterbewegung durch die sich schneidenden Umfangskreise der Abtriebsscheibe und der Kurvenscheibe und deren Blockierung durch zwei benachbarte Rollen zuverlässig unterbunden wird.

Mit der erfindungsgemäßen Getriebeanordnung kann erreicht werden, dass die Scheiben nach jeder Schrittschaltung der Kurvenscheibe um einen definierten Drehwinkel in der jeweils erreichten Winkellage fixiert werden. Das vorrangige Ziel des erfindungsgemäßen Schrittschaltgetriebes ist nicht die Endlagensperrung, sondern die besonders zuverlässige und sehr leichtgängige und reibungsarme Schrittschaltfunktion. Da auf die bekannten und bisher verwendeten Reibgesperre zugunsten eines Rollengesperres verzichtet wird, wird eine sehr exakt schaltende und ohne nennenswerte Reibung arbeitende Drehübertragung mit Schrittschaltfunktion zur Verfügung gestellt. Die durch das Schrittschaltgetriebe gebildete Übertragungsfunktion ist durch die Konturierung der Kurvenscheibe bzw. der Mehrzahl von Kurvenscheiben und/oder der Platzierung bzw. der Anzahl der an der Scheibe angeordneten Rollen in gewissen baulichen Grenzen beeinflussbar. Beispielsweise können bei einer Auslegung mit sechs gleichmäßig am Umfang der Scheibe verteilten Rollen mittels Antriebswinkeln von ca. 80° bis 120° Abtriebswinkel von 60° oder 120° realisiert werden, je nach gewünschten Übersetzungsverhältnissen. Ebenso denkbar ist eine Beeinflussung der Charakteristiken der Übertragungsfunktion selbst bei gleichem Verhältnis vom Antriebswinkel zum Abtriebswinkel, indem bspw. ein Polynom 5. Ordnung oder eine geneigte Sinuslinie o. dgl. verwendet werden. Darüber hinaus ist es möglich, nahezu beliebige Abtriebswinkel zu erzielen, wenn keine zwei aufeinander folgenden Betätigungen in jeweils gleicher Richtung gefordert sind.

Bei einer weiteren bevorzugten Variante des Schrittschaltgetriebes ist ein Paar koaxial bzw. achsparallel zueinander angeordneter Kurvenscheiben mit jeweils weitgehend gleicher Größe und Außenkontur versetzt zueinander drehfest an der mit dem Kurbelgetriebe gekoppelten Welle angeordnet. Dieses Paar von Kurvenscheiben befindet sich mit einem korrespondierenden Paar von konzentrisch auf der Schalterwelle und zueinander versetzt angeordneten Scheiben mit daran gelagerten Eingriffselementen im Wirkungseingriff. Die jeweils miteinander im Wirkungseingriff befindlichen Scheiben und Kurvenscheibe sind vorzugsweise paarweise gleich aufgebaut und dimensioniert und jeweils derart versetzt zueinander auf ihren zugeordneten Wellen angeordnet, dass eine Zwangsführung der miteinander wälzenden Rollen und Außenkonturen der Kurvenscheiben gegeben ist. Die Scheibe mit den daran gelagerten Rollen kann nur dann weitergedreht werden, wenn der passende konkave Kurvenabschnitt an der jeweiligen Kurvenscheibe in eine Position gedreht wird, um eine Rolle aufzunehmen. Die fließend geformten Übergänge vom größeren Durchmesser der Kurvenscheibe auf die als Ausnehmung mit kleinerem Durchmesser ausgebildeten konkaven Aufnahmekonturen, die von ihrer Innenkontur und von ihrem Innenradius vorzugsweise dem Durchmesser und der Kontur der korrespondierenden Rollen angepasst ist, ermöglichen dann bei entsprechender Drehung der Kurvenscheibe die schrittweise Bewegung der Abtriebsscheibe sowie der damit drehfest verbundenen Schalterwelle. Um diese gewünschten Bewegungen der parallel zueinander angeordneten Wellen zu ermöglichen, können die Außenkonturen der Kurvenscheiben vorzugsweise weitgehend spielfrei oder mit geringem Radialspiel gegen die Außenmantelflächen der drehbar gelagerten Rollen bzw. Eingriffselemente der Scheibe bzw. der Scheiben abwälzen.

Wie auch anhand der nachfolgend beschriebenen Ausführungsbeispiele anschaulich gemacht wird, ist das treibende Element des erfindungsgemäßen Schrittschaltgetriebes aus zwei übereinander angeordneten Kurvenscheiben gebildet. Das getriebene Element ist aus zwei Ebenen der Scheibe mit jeweils sechs gleichmäßig am Außenumfang verteilten Rollen gebildet. Die Kurvenscheiben greifen während der Umschaltung in die ihnen zugeordnete Ebene ein und bewegen das getriebene Element weitgehend ruckfrei von einer Rast- bzw. Betriebsstellung zur nächsten. Die Rollen des getriebenen Elements wälzen dabei spielarm auf den jeweiligen Kurvenflanken ab, die jeweils Teilabschnitte einer durchgängigen, aus mehreren konvexen und konkaven Abschnitten gebildeten Gesamtkurve sind.

Eine alternative Variante des erfindungsgemäßen Schrittschaltgetriebes kann vorsehen, dass die Kurvenscheibe wenigstens einen an ihrer Stirnseite in Nähe ihres Außenumfangs angeordneten Sperrbolzen aufweist, der mit einem Sternrad mit mehreren mantelseitigen Kurvenabschnitten zusammenwirkt, das drehfest mit der Schalterwelle verbunden und konzentrisch zur Scheibe mit den Eingriffselementen angeordnet ist. Bei dieser Variante des Schrittschaltgetriebes ist nur ein miteinander in Wirkungseingriff befindlicher Satz von Scheibe und Kurvenscheibe erforderlich, da die oben erläuterte zweite Scheibe, die mit einer zweiten Kurvenscheibe zusammenwirkt, durch die an der Kurvenscheibe angeordneten Bolzen ersetzt ist, der in das drehfest mit der Schalterwelle verbundene Sternrad eingreifen kann. Die Teilung dieses Sternrads, das relativ tiefe Eingriffstaschen zur Aufnahme des Bolzens bzw. der Mehrzahl von Bolzen aufweist, ist zweckmäßigerweise auf die Anzahl der vorhandenen Eingriffselemente bzw. Rollen abgestimmt. So sind bspw. bei drei vorhandenen Rollen auch drei Eingriffstaschen am Sternrad erforderlich, damit dieses die gewünschte Funktion erfüllen kann. Das erwähnte Sternrad ähnelt in seiner Kontur entfernt den aus dem Stand der Technik bekannten Malteserscheiben, erfüllt jedoch gegenüber diesen eine veränderte Aufgabe, da es lediglich unterstützend zur Positionierung der Scheibe gegenüber der sich drehenden Kurvenscheibe wird, um die Scheibe exakt in den gewünschten Winkelschritten positionieren und weiterdrehen zu können. Zu diesem Zweck kann die Kurvenscheibe jeweils beidseitig benachbart zu einem mantelseitigen konkaven Kurvenabschnitt einen Sperrbolzen aufweisen, wobei dieser konkave Kurvenabschnitt mit einem der Eingriffselemente bzw. drehbaren Bolzen der Scheibe und die beiden Sperrbolzen mit den konkaven Kurvenabschnitten des Sternrads zusammenwirken.

Die gewünschten Schaltschritte werden mittels des erfindungsgemäßen Schrittschaltgetriebes dadurch realisiert, dass die Kurvenscheibe in nicht gesperrtem, sich drehendem Zustand mit seiner Außenmantelfläche weitgehend spielfrei gleichzeitig gegen zwei Eingriffselemente bzw. drehbare Bolzen der Scheibe abwälzt. Eine sinnvolle Variante des Schrittschaltgetriebes kann bspw. so ausgebildet sein, dass die konkaven Kurvenabschnitte der Kurvenscheibe und die korrespondierenden Eingriffselemente bzw. drehbaren Bolzen der mit der Schalterwelle drehfest verbundenen Scheibe jeweils eine 120°-Teilung aufweisen. Für eine solche Variante sind drei gleichmäßig am Umfang der Scheibe angeordnete Rollen und ggf. konkave Kurvenabschnitte für die Sperrbolzen erforderlich. Wahlweise sind jedoch auch andere Teilungsschritte möglich, bei denen zwei, vier oder bspw. fünf oder mehr Rollen gleichmäßig über den Umfang der Scheibe verteilt angeordnet sind.

Die Erfindung wird nachfolgend anhand von Ausführungsbeispielen unter Verwendung der nachfolgend beschriebenen Zeichnungen näher erläutert.
Fig. 1 zeigt eine perspektivische Ansicht einer Ausführungsvariante eines erfindungsgemäßen Schrittschaltgetriebes.
Fig. 2 zeigt eine Draufsicht auf das Schrittschaltgetriebe gemäß Fig. 1.
Fig. 3 zeigt eine Seitenansicht des Schrittschaltgetriebes gemäß Fig. 1.
Fig. 4 zeigt eine weitere perspektivische Ansicht des Schrittschaltgetriebes gemäß Fig. 1.
Fig. 5 zeigt eine schematische Draufsicht einer alternativen Ausführungsvariante eines erfindungsgemäßen Schrittschaltgetriebes.
Fig. 6 zeigt eine perspektivische Ansicht des Schrittschaltgetriebes gemäß Fig. 5.
Fig. 7 zeigt eine weitere perspektivische Ansicht des Schrittschaltgetriebes gemäß Fig. 5.

Die nachfolgend beschriebenen Ausführungsbeispiele zum erfindungsgemäßen Schrittschaltgetriebe sind nicht einschränkend zu verstehen, sondern dienen zur Erläuterung der Funktion und der Schaltmöglichkeiten des Schrittschaltgetriebes.

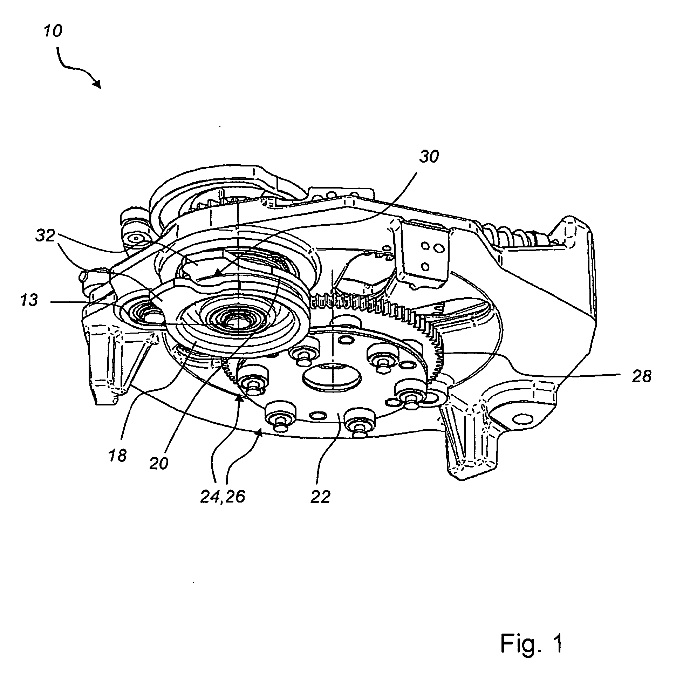

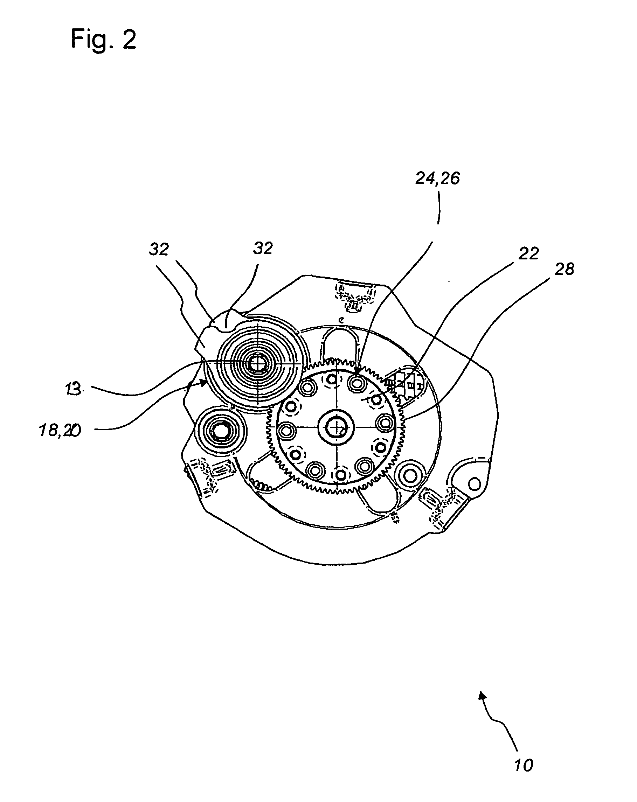

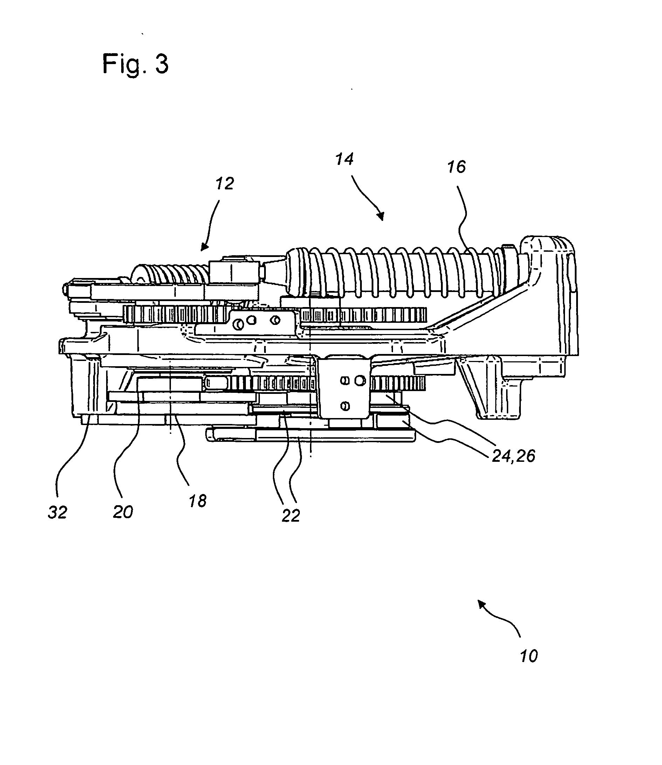

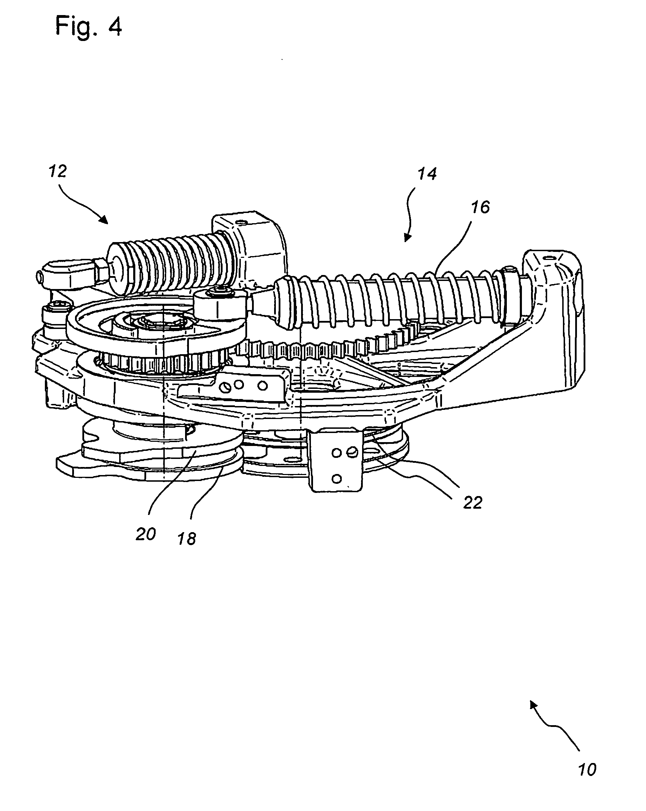

Die Darstellungen der Figuren 1 bis 4 zeigen in mehreren Ansichten eine erste Ausführungsvariante eines erfindungsgemäßen Schrittschaltgetriebes, das allgemein mit der Bezugsziffer 10 bezeichnet ist. Ein solches Schrittschaltgetriebe 10 wird insbesondere bei Laststufenschalter (nicht dargestellt) eines Stufentransformators (hier ebenfalls nicht dargestellt) eingesetzt, um damit an sich bekannte Stufenschalter mit mechanischen Schaltelementen und/oder Vakuumschaltröhren o. dgl. zu aktivieren und/oder umzuschalten. Das Schrittschaltgetriebe 10 weist ein Kurbelgetriebe 12 und wenigstens einen damit gekoppelten Energiespeicher 14 auf, der im gezeigten Ausführungsbeispiel mit einer auf Zug und/oder Druck belasteten Schraubenfeder 16 versehen ist. Das Kurbelgetriebe 12 ist über eine Welle 13 mit einem Paar von Kurvenscheibe 18 und 20 gekoppelt, die mit einer Scheibe 22 mit daran drehbar gelagert angeordneten Eingriffselementen 24 zusammenwirken und in einem Wirkungseingriff stehen. Diese Eingriffselemente 24 sind jeweils als auf der Scheibe 22 in Nähe ihres Außenumfangs drehbar gelagerten Rollen 26 ausgebildet. Die Scheibe 22 mit den daran drehbar gelagerten Eingriffselementen 24 bzw. Rollen 26 ist drehfest mit einer Schalterwelle verbunden. Von dieser drehfesten Verbindung ist im dargestellten Ausführungsbeispiel lediglich ein Abtriebszahnrad 28 dargestellt.

Die dargestellte Getriebeanordnung dient dazu, die Kurvenscheiben 18 und 20 in Zusammenwirkung mit den Eingriffselementen 24 bzw. Rollen 26 der Scheibe 22 eine stufenweise Drehung der Scheibe 22 und damit der Schalterwelle um einen definierten Schrittwinkel - hier bspw. 60° bei sechs vorhandenen Rollen 26 am Außenumfang der Scheibe 22 - auslösen zu lassen. Die drehbar an den beiden Flachseiten in Nähe des Außenumfangs der Scheibe 22 gelagerten Rollen 26 können in korrespondierende muldenförmige bzw. konkave Kurvenabschnitte 30 an der Außenmantelfläche der jeweiligen Kurvenscheibe 18 oder 20 eingreifen. Bei dieser Wälzpaarung wälzen die Rollen 26 an der Außenmantelfläche der Kurvenscheiben 18 bzw. 20, wobei eine sehr geringe Reibung entsteht.

Beim gezeigten Schrittschaltgetriebe 10 sind insgesamt sechs drehbare Rollen 26 bzw. Eingriffselemente 24 in regelmäßiger Winkelteilung am Außenumfang der Scheibe 22 angeordnet. Die Drehachsen der Rollen 26 sind parallel zur Drehachse der Scheibe 22 und damit auch der Schalterwelle orientiert, so dass ein leicht laufendes und zuverlässig funktionierendes Schrittschaltgetriebe 10 mit einer entsprechend der gewählten Anzahl der Rollen 26 und deren Verteilung am Außenumfang der Scheibe 22 definierten Winkelteilung von jeweils 60 Grad gebildet ist. Die Außenkontur der Kurvenscheiben 18 und 20 mit den jeweils wenigstens einen darin ausgebildeten konkaven Kurvenabschnitten bzw. -segmenten 30 ist so gestaltet, dass während des Schaltschrittes die Rolle 26 weitgehend spielfrei in dem konkaven Kurvenabschnitt 30 an der Mantelseite der jeweiligen Kurvenscheibe 18 bzw. 20 abwälzen kann, während in der gesperrten Lage bzw. in der Raststellung eine Weiterbewegung durch die sich schneidenden Umfangskreise der Scheibe 22 und der Kurvenscheibe 18 bzw. 20 und deren Blockierung durch zwei benachbarte Rollen 26 unterbunden werden kann. Die Scheibe 22 mit den daran gelagerten Rollen 26 kann nur dann weitergedreht werden, wenn die passende Ausnahmetasche 30 an der jeweiligen Kurvenscheibe 18 bzw. 20 in eine Position gedreht wird, um eine Rolle 26 aufzunehmen. Die fließend geformten Übergänge vom größeren Durchmesser der Kurvenscheibe 18 bzw. 20 auf den als Ausnehmung mit kleinerem Durchmesser ausgebildeten konkaven Kurvenabschnitt 30 sowie dem sich daran anschließenden Steg 32 größeren Durchmessers, wobei der konkave Kurvenabschnitt 30 und der Übergang zum Steg 32 von ihren Konturen dem Durchmesser und der Kontur der korrespondierenden Rollen 26 angepasst sind, ermöglichen dann bei entsprechender Drehung der Kurvenscheibe 18 bzw. 20 die schrittweise Bewegung der Scheibe 22 sowie der damit gekoppelten Schalterwelle. Um diese gewünschten Bewegungen der parallel zueinander angeordneten Wellen zu ermöglichen, können die Außenkonturen der Kurvenscheiben 18 und 20 weitgehend spielfrei oder mit geringem Radialspiel gegen die Außenmantelflächen der drehbar gelagerten Rollen 26 bzw. Eingriffselemente 24 der Scheibe 22 abwälzen.

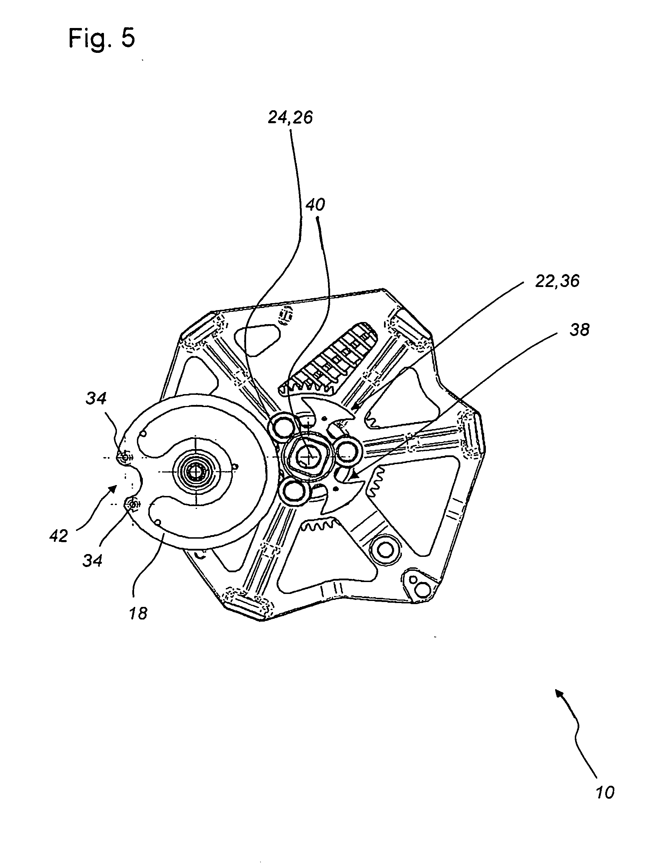

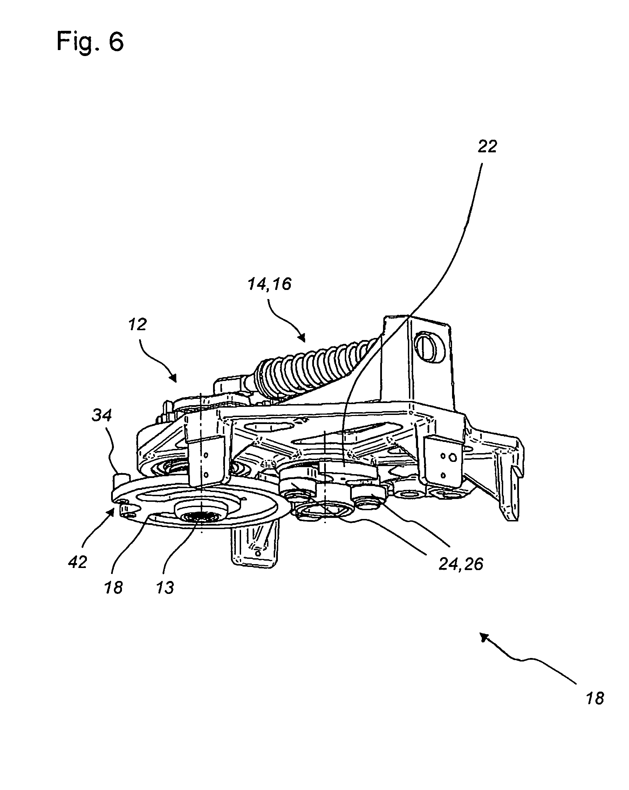

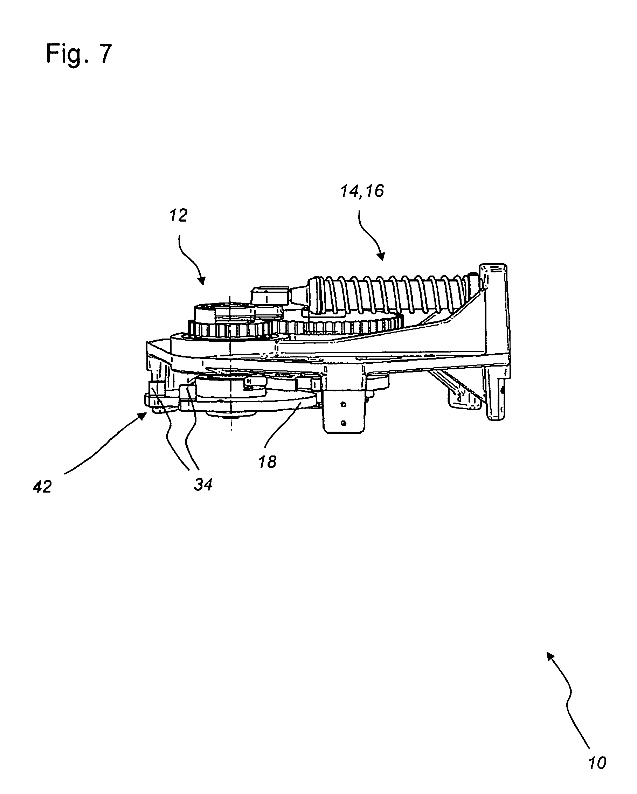

Die Darstellungen der Figuren 5 bis 7 zeigen mehrere Ansichten einer alternativen Ausführungsvariante des erfindungsgemäßen Schrittschaltgetriebes 10. Bei dieser Variante des Schrittschaltgetriebes 10 weist die Kurvenscheibe 18 zwei an ihrer Stirnseite in Nähe ihres Außenumfangs angeordnete Sperrbolzen 34 auf, die mit einem Sternrad 36 mit mehreren mantelseitigen konkaven Kurvenabschnitten bzw. Kurvensegmenten 38 zusammenwirken. Das Sternrad 36 selbst ist drehfest mit der Schalterwelle 40 verbunden und bildet im gezeigten Ausführungsbeispiel gleichzeitig die Scheibe 22 mit den daran angeordneten Eingriffselementen 24 bzw. Rollen 26. Bei dieser Variante des Schrittschaltgetriebes 10 ist nur ein miteinander in Wirkungseingriff befindlicher Satz von Scheibe 22 bzw. Sternrad 36 und Kurvenscheibe 18 erforderlich, da die oben erläuterte Scheibe mit beidseitig angeordneten Rollen 26, die mit einem Paar Kurvenscheiben zusammenwirkt, durch die an der Kurvenscheibe 18 angeordnete Bolzen 34 entbehrlich sind. Die Bolzen 34 können jeweils in die beidseitig neben jeder Rolle 26 angeordneten konkaven Kurvenabschnitte 38 eingreifen. Die Teilung dieses Sternrades 36, das relativ tief ausgeformte konkave Kurvensegmente 38 zur Aufnahme der Bolzen 34 aufweist, ist zweckmäßigerweise auf die Anzahl der vorhandenen Eingriffselemente 24 bzw. Rollen 26 abgestimmt. So sind bspw. bei drei vorhandenen Rollen 26 auch drei Paare von konkaven Kurvenabschnitten 38 am Sternrad 36 erforderlich, damit dieses die gewünschte Funktion erfüllen kann.

Die Kurvenscheibe 18 weist zwischen den beiden benachbarten Sperrbolzen 34 einen konkaven Kurvenabschnitt 42 auf, der mit den Eingriffselementen 24 bzw. drehbaren Bolzen 26 der Scheibe 22 bzw. des Sternrads 36 zusammenwirkt, wobei bei einer entsprechenden Positionierung der Kurvenscheibe 18 und des Sternrads 36 gleichzeitig die beiden Sperrbolzen 34 mit den konkaven Kurvenabschnitten 38 des Sternrads 36 zusammenwirken und in Eingriff stehen. Die gewünschten Schaltschritte werden dadurch realisiert, dass die Kurvenscheibe 18 in nicht gesperrtem, sich drehendem Zustand entsprechend Fig. 5 mit seiner Außenmantelfläche weitgehend spielfrei gleichzeitig gegen zwei drehbare Bolzen 26 der Scheibe 22 bzw. des Sternrades 36 abwälzt. Die konkaven Kurvenabschnitte und die korrespondierenden drehbaren Rollen 26 der mit der Schalterwelle 40 drehfest verbundenen Sternrades 36 weisen jeweils eine 120°-Teilung auf. Diese Variante weist deshalb drei gleichmäßig am Umfang des Sternrades 36 angeordnete Rollen 26 und entsprechende Kurvensegmente 38 zur Aufnahme der Sperrbolzen 34 auf. Wahlweise sind jedoch auch andere Teilungsschritte möglich, bei denen zwei, vier oder bspw. fünf oder mehr Rollen gleichmäßig über den Umfang der Scheibe verteilt angeordnet sind.

## Patentansprüche

1. Schrittschaltgetriebe (10) für einen Laststufenschalter oder Stufenwähler eines Stufentransformators, bei dem mindestens eine über ein Kurbelgetriebe (12) angetriebene Kurvenscheibe (18; 20) mit einer Abtriebsscheibe (22) mit daran angeordneten Eingriffselementen (24) zusammenwirkt, die drehfest mit einer Schalterwelle (40) verbunden ist, wobei die wenigstens eine Kurvenscheibe (18; 20) in Zusammenwirkung mit den Eingriffselementen (24) der Abtriebsscheibe (22) eine stufenweise Drehung der Schalterwelle (40) um einen definierten Schrittwinkel auslöst, wobei die Eingriffselemente (24), durch drehbar an einer Flachseite in Nähe des Außenumfangs der Abtriebsscheibe (22) gelagerte Rollen (26) gebildet sind, **dadurch gekennzeichnete, dass** die mit einer korrespondierenden Eingriffskontur mit regelmäßig aufeinander folgenden und ineinander übergehenden konvexen und konkaven Kurvenabschnitten (30; 42) an der Außenmantelfläche der Kurvenscheibe (18; 20) abwälzen.

2. Schrittschaltgetriebe nach Anspruch 1, bei dem zwei, drei oder mehr Eingriffselemente (24) bzw. drehbare Rollen (26) in jeweils regelmäßiger Winkelteilung am Außenumfang der Abtriebsscheibe (22) angeordnet sind, die mit den Kurvenabschnitten (30; 42) der Kurvenscheibe (18; 20) zusammenwirken.

3. Schrittschaltgetriebe nach Anspruch 1 oder 2, bei dem die wenigstens eine Abtriebsscheibe (22) nach jeder Schrittschaltung der Kurvenscheibe (18; 20) um einen definierten Drehwinkel in der jeweils erreichten Winkellage fixiert ist.

4. Schrittschaltgetriebe nach einem der Ansprüche 1 bis 3, bei dem jeweils ein Paar koaxial bzw. achsparallel zueinander angeordneter Kurvenscheiben (18, 20) mit jeweils weitgehend gleicher Größe und Außenkontur versetzt zueinander drehfest an der mit dem Kurbelgetriebe (12) gekoppelten Welle (13) angeordnet sind, die sich mit einem Satz koaxial bzw. achsparallel mit der Schalterwelle (40) gekoppelter und zueinander versetzt angeordneter, an der Abtriebsscheibe (22) drehbar gelagerter Eingriffselemente (24) im Wirkungseingriff befinden.

5. Schrittschaltgetriebe nach einem der Ansprüche 1 bis 4, bei dem die Außenkonturen der Kurvenscheiben (18, 20) weitgehend spielfrei oder mit geringem Radialspiel gegen die Außenmantelflächen der drehbar gelagerten Rollen (26) bzw. Eingriffselemente (24) der wenigstens einen Antriebsscheibe (22) abwälzen.

6. Schrittschaltgetriebe nach einem der Ansprüche 1 bis 3, bei dem die Kurvenscheibe (18; 20) wenigstens einen an ihrer Stirnseite in Nähe ihres Außenumfangs angeordneten Sperrbolzen (34) aufweist, der mit einer als Sternrad (36) ausgebildeten Abtriebsscheibe (22) mit mehreren mantelseitigen konkaven Kurvenabschnitten (38) in der mantelseitigen Außenkontur der Antriebsscheibe (22) zusammenwirkt, die drehfest mit der Schalterwelle (40) verbunden ist, wobei die Abtriebsscheibe (22) bzw. das Sternrad (36) die Eingriffselemente (24) trägt.

7. Schrittschaltgetriebe nach Anspruch 6, bei dem die Kurvenscheibe (18; 20) jeweils beidseitig benachbart zu einem mantelseitigen konkaven Kurvenabschnitt (42) einen Sperrbolzen (34) aufweist, wobei der konkave Kurvenabschnitt (42) mit einem der Eingriffselemente (24) bzw. drehbaren Bolzen (26) der Abtriebsscheibe (22) und die beiden Sperrbolzen (34) mit den konkaven Kurvenabschnitten (38) des Sternrades (36) zusammenwirken.

8. Schrittschaltgetriebe nach einem der Ansprüche 1 bis 7, bei dem die Kurvenscheibe (18; 20) in nicht gesperrtem, sich drehendem Zustand mit seiner Außenmantelfläche weitgehend spielfrei gleichzeitig gegen zwei Eingriffselemente (24) bzw. drehbare Bolzen (26) der Abtriebsscheibe (22) abwälzt, wodurch diese in ihrer Drehung gesperrt ist.

9. Schrittschaltgetriebe nach einem der Ansprüche 1 bis 8, bei dem die konkaven Kurvenabschnitte (38) des Sternrades (36) und die korrespondierenden Eingriffselemente (24) bzw. drehbaren Bolzen (26) der mit der Schalterwelle (40) drehfest verbundenen Abtriebsscheibe (22) jeweils eine 120°-Teilung aufweisen.

10. Schrittschaltgetriebe nach einem der Ansprüche 1 bis 9, bei dem die von den Kurvenscheiben (18, 20) ausgelösten Drehbewegungen der Abtriebsscheibe (22) bzw. des Sternrades (36) weitgehend ruckfrei von einer Raststellung zur nächsten bewegbar sind.

## Claims

1. Indexing transmission (10) for an on-load tap changer or a tap selector of a tapped transformer, in which at least one cam disc (18; 20), which is driven by way of a crank transmission (12), co-operates with a drive output disc (22) with engagement elements (24) arranged thereon, the drive output disc being connected with a switch shaft (40) to be secure against rotation relative thereto, wherein the at least one cam disc (18; 20) in cooperation with the engagement elements (24) of the drive output disc (22) triggers a stepped rotation of the switch shaft (40) through a defined step angle, wherein the engagement elements (24) are formed by rollers (26), which are rotatably mounted at a flat side in the vicinity of the outer circumference of the drive output disc (22), **characterised in that** the rollers (26) roll on the outer circumferential surface of the cam disc (18; 20) by a corresponding engagement profile with convex and concave cam sections (30; 42) in regular succession and transitioning into one another.

2. Indexing transmission according to claim 1, in which two, three or more engagement elements (24) or rotatable rollers (26) are respectively arranged at regular angular pitch at the outer circumference of the drive output disc (22) and co-operate with the cam sections (30; 42) of the cam disc (18; 20).

3. Indexing transmission according to claim 1 or 2, in which the at least one drive output disc (22) is, after each indexing of the cam disc (18; 20) through a defined rotational angle, fixed in the respectively attained angular position.

4. Indexing transmission according to any one of claims 1 to 3, in which a respective pair of cam discs (18; 20), which are arranged coaxially or axially parallel to one another, with respectively substantially the same size and outer profile are arranged rotationally fixed relative to one another at the shaft (13) coupled with the crank transmission (12), which are disposed in operative engagement with a set of engagement elements (24) which are coupled coaxially or axially parallelly with the switch shaft (40) and arranged to be offset relative to one another and which are rotatably mounted on the drive output disc (22).

5. Indexing transmission according to any one of claims 1 to 4, in which the outer profiles of the cam discs (18, 20) roll substantially free of play or with small radial play against the outer circumferential surfaces of the rotatably mounted rollers (26) or engagement elements (24) of the at least one drive output disc (22).

6. Indexing transmission according to any one of claims 1 to 3, in which the cam disc (18; 20) has at least one blocking pin (34), which is arranged at the end face thereof in the vicinity of its outer circumference and which co-operates with a drive output disc (22), which is constructed as a star wheel (36), with a plurality of circumferential concave cam sections (38) in the circumferential outer profile of the drive output disc (22), which is connected with the switch shaft (40) to be secure against relative rotation, wherein the drive output disc (22) or the star wheel (36) carries the engagement elements (24).

7. Indexing transmission according to claim 6, in which the cam disc (18; 20) has a respective blocking pin (34) on either side adjacent to a circumferential concave cam section (42), wherein the concave cam section (42) co-operates with one of the engagement elements (24) or rotatable pins (26) of the drive output disc (22) and the two blocking pins (34) co-operate with the concave cam sections (28) of the star wheel (36).

8. Indexing transmission according to any one of claims 1 to 7, in which the cam disc (18; 20) in the non-blocked, rotating state rolls by the outer circumferential surface thereof substantially free of play simultaneously against two engagement elements (24) or rotatable pins (26) of the drive output disc (22), whereby this is blocked in its rotation.

9. Indexing transmission according to any one of claims 1 to 8, in which the concave cam sections (38) of the star wheel (36) and the corresponding engagement elements (24) or rotatable pins (26) of the drive output disc (22) connected with the switch shaft (40) to be secure against relative rotation each have a 120° pitch.

10. Indexing transmission according to any one of claims 1 to 9, in which the rotational movements, which are triggered by the cam discs (18, 20), of the drive output disc (22) or the star wheel (36) are movable substantially jolt-free from one detent setting to the next.

## Revendications

1. Indexeur pas à pas (10) pour un commutateur de prises en charge ou un sélecteur de prises d'un transformateur à gradins dans lequel au moins un disque à came (18, 20) entrainé par un mécanisme à manivelle (12) coopère avec un disque entrainé (22) sur lequel sont montés des éléments de mise en prise (24) et qui est relié solidairement en rotation à un arbre de commutateur (40), le disque à came (18, 20) déclenchant en coopération avec les éléments de mise en prise (24) du disque entrainé (22) une rotation pas à pas de l'arbre de commutateur (40) sur une plage angulaire discontinue définie, les éléments de mise en prise (24) étant formés par des galets (26) montés mobiles en rotation sur une face plane, à proximité de la périphérie externe du disque entrainé (22), **caractérisée en ce que**
les galets (26) roulent sur la surface enveloppe externe du disque à came (18, 20) avec un contour de mise en prise correspondant comportant une succession régulière de segments de came (30, 42) convexes et concaves pénétrant les uns dans les autres.

2. Indexeur pas à pas conforme à la revendication 1, dans lequel deux, trois ou un plus grand nombre d'éléments de mise en prise (24) ou de galets rotatifs (26) sont situés dans une subdivision angulaire régulière respective sur la périphérie externe du disque entrainé (22), et coopèrent avec les segments de came (30, 42) du disque à came (18, 20).

3. Indexeur pas à pas conforme à la revendication 1 ou 2, dans lequel le disque entrainé (22) est fixé après chaque pas de commutation du disque à came (18, 20) d'une plage angulaire de rotation définie dans la position angulaire respectivement atteinte.

4. Indexeur pas à pas conforme à l'une des revendications 1 à 3, dans lequel les disques à cames d'une paire de disques à came coaxiaux ou d'axes parallèles respective (18, 20) ayant respectivement des dimensions et un contour externe largement similaires sont montés décalés l'un par rapport à l'autre et solidaires en rotation sur l'arbre (13) accouplé au mécanisme à manivelle (12), et sont en liaison fonctionnelle avec un jeu d'éléments de mise en prise coaxiaux ou d'axe parallèles (24) accouplés à l'arbre de commutateur (40) et décalés l'un par rapport à l'autre et montés mobiles en rotation sur le disque entrainé (22).

5. Indexeur pas à pas conforme à l'une des revendications 1 à 4, dans lequel les contours externes des disques à came (18, 20) roulent essentiellement sans jeu ou avec un faible jeu radial sur les surfaces enveloppes externes des galets (26) ou des éléments de mise en prise (24) montés rotatifs du disque entrainé (22).

6. Indexeur pas à pas conforme à l'une des revendications 1 à 3, dans lequel le disque à came (18, 20) comporte au moins un goujon de blocage (34) monté sur sa face frontale à proximité de sa périphérie externe et qui coopère avec un disque entrainé (22) réalisé sous la forme d'une roue étoile (36) avec plusieurs segments de came concaves (38) situés côté enveloppe dans le contour externe situé côté enveloppe du disque d'entrainement (22) qui est relié solidairement en rotation à l'arbre de commutateur (40), le disque entrainé (22) ou la roue étoile (36) portant les éléments de mise en prise (24).

7. Indexeur pas à pas conforme à la revendication 6, dans lequel le disque à came (18, 20) comporte un goujon de blocage (34) respectif de chaque côté au voisinage d'un segment de came concave (42) situé côté enveloppe, ce segment de came concave (42) coopérant avec l'un des éléments de mise en prise (24) ou des galets (26) du disque entrainé (22) et les deux goujons de blocage (22) coopérant avec les segments de came concaves (38) de la roue étoile (36).

8. Indexeur pas à pas conforme à l'une des revendications 1 à 7, dans lequel à l'état mobile en rotation non bloqué le disque à came (18, 20) roule par sa surface enveloppe externe largement sans jeu simultanément contre deux éléments de mise en prise (24) ou galets rotatifs (26) du disque entrainé (22), par suite de quoi ce disque est bloqué en rotation.

9. Indexeur pas à pas conforme à l'une des revendications 1 à 8, dans lequel les segments de came concaves (38) de la roue étoile (36) et les éléments de mise en prise (24) ou les galets rotatifs (26) correspondants du disque entrainé (22) reliés solidairement en rotation à l'arbre de commutateur (40) sont respectivement écartés de 120°.

10. Indexeur pas à pas conforme à l'une des revendications 1 à 9, dans lequel les mouvements de rotation du disque entrainé (22) ou de la roue étoile (36) déclenchés par le disque à came (18, 20) sont largement mobiles sans à-coups d'une position d'encliquetage à la suivante.
